# EUROPÄISCHE PATENTSCHRIFT

(11) **EP 0 306 842 B1**
(45) Veröffentlichungstag und Bekanntmachung des Hinweises auf die Patenterteilung: **24.02.1993**
(21) Anmeldenummer: 88114307.7
(22) Anmeldetag: 02.09.1988
(51) Int. Cl.: B29D 7/01, B29C 47/34, B29C 47/88

(54) **Verfahren und Vorrichtung zum Anlegen eines Films aus einer Kunststoffschmelze an eine bewegte Kühlfläche**
Method and apparatus for feeding a film of molten plastic to a moving cooling surface
Procédé et appareil pour appliquer une feuille en matière plastique fondue sur une surface de refroidissement en mouvement

(30) Priorität: 08.09.1987 DE 3729985
(43) Veröffentlichungstag der Anmeldung: 15.03.1989
(73) Patentinhaber: HOECHST AKTIENGESELLSCHAFT, 65926 Frankfurt am Main (DE)
(72) Erfinder: Dinter, Peter, Dipl.-Ing., D-6227 Hallgarten (DE); Dallmann, Herrmann, Dr. Dipl.-Chem., D-6200 Wiesbaden-Naurod (DE)

(56) Entgegenhaltungen:
- DE-A- 2 311 576
- DE-A- 2 460 432
- DE-B- 1 504 433
- DE-B- 1 629 472

## Beschreibung

Die Erfindung betrifft ein Verfahren gemäß Oberbegriff des Anspruchs 1 und eine Vorrichtung gemäß Oberbegriff des Anspruchs 8 zum Anlegen eines Films aus einer Kunststoffschmelze an eine bewegte Kühlfläche, bei dem ein Schmelzefilm aus einer Breitschlitzdüse ohne Lufteinschluß auf die Kühlfläche extrudiert und auf die freie Oberfläche des an der Kühlfläche anliegenden Schmelzefilms durch einen Gas- bzw. Luftstrom Druck ausgeübt wird.

Bei der Herstellung von Flachfolien aus thermoplastischen Polymerisaten durch Extrusion werden bewegte Kühlflächen, beispielsweise umlaufende Stahlbänder, insbesondere rotierende Kühlwalzen, eingesetzt, auf die der aus der Breitschlitzdüse austretende Schmelzefilm angelegt wird, um die Schmelze möglichst schnell unter ihre Einfriertemperatur abzukühlen und dadurch die Kristallisation weitgehendst zu verhindern. Die Bestrebungen, die Herstellgeschwindigkeit zum Erzielen einer größeren Wirtschaftlichkeit zu steigern, sind vorwiegend auf eine Verbesserung und Optimierung der Anlegetechnik ausgerichtet. Die Geschwindigkeitserhöhung basiert auf der Erfahrung, daß beim Anlegen einer Polymerschmelze auf eine bewegte Kühlfläche eine Luftschicht zwischen Schmelzefilm und bewegte Unterlage eingezogen wird, die exponentiell mit der Abzugsgeschwindigkeit zunimmt. Als Folge dieses verstärkten Lufteinzugs zwischen Schmelzefilm und Walzenoberfläche tritt eine Beeinträchtigung des Abkühlprozesses auf, was wiederum zur Qualitätsminderung des Produktes in Gestalt von regelmäßigen Trübungsmustern, Dickenschwankungen und Oberflächenstrukturen führt.

Eines der bekanntesten Verfahren zum Anlegen von Polymerschmelzen an Kühlflächen wird in der Fachwelt als "Pinning" bezeichnet und besteht darin, das Anlegen eines Schmelzefilms durch elektrostatisches Aufladen des Schmelzefilms zu unterstützen. Das im Stand der Technik (DE-OSen 20 22 886, 32 23 757, 20 22 902, 17 78 228, 22 58 996, 20 52 381, 23 24 345) beschriebene und in verschiedenen Abwandlungen angewandte Verfahren arbeitet derart, daß von einer mit einer hohen Gleichspannung beaufschlagten Elektrode, im allgemeinen in Form eines dünnen Drahtes, elektrostatische Ladungen auf den Schmelzefilm aufgebracht werden, wodurch das Anlegen des Schmelzefilms an die auf Erdpotential befindliche Kühlwalze durch die elektrostatische Anziehung ungleich geladener Flächen unterstützt wird.

Diese Technologie weist aber, wie die Praxis gezeigt hat, erhebliche Mängel auf. Hierzu zählt u.a. die Gefahr unkontrollierter elektrischer Überschläge, die hauptsächlich von äußeren Umwelteinflüssen sowie Prozeß- und Maschinenparametern abhängen und in den meisten Fällen zu Beschädigungen des Films führen.

Ein weiterer Nachteil des bekannten Verfahrens ist in der Art der bevorzugt verwendeten Elektroden zu sehen. Diese sind vorwiegend Stahldrähte, die an der Auflaufstelle der Folie auf die Kühlwalze über deren gesamte Länge gespannt sind. Da der Ionisierungsstrom bei dünnen Elektroden bereits beim Anlegen niedriger elektrischer Spannungen zu fließen beginnt, werden extrem dünne Drähte mit 12,7 bis 17,8 µm Durchmesser (DE-AS 24 05 863) eingesetzt. Die mechanische Festigkeit solcher extrem dünner Drähte bildet die Grenze der für eine exakte Justierung über eine größere Breite erforderlichen Zugspannung. Durchhängen und Flattern des sehr dicht am Schmelzefilm angeordneten Elektrodendrahtes können demnach nicht durch beliebige Erhöhung der Zugspannung eleminiert werden. Tritt durch Flattern dieser Drähte, was in der Praxis immer wieder einmal vorkommt, ein Kontakt zwischen Elektrode und Schmelzefilm auf, so reißt der Elektrodendraht unweigerlich ab. Die Neubestückung und ein aufwendiges Einstellen der Vorrichtung haben dann eine längere Unterbrechung des Produktionsablaufes zur Folge.

Im wesentlichen treten diese Nachteile auch bei dem in der DE-AS 24 05 863 beschriebenen Verfahren auf. Dieses Verfahren unterscheidet sich gegenüber dem elektrostatischen Anlegen, bei dem Gleichstrom positiver oder negativer Polarität benutzt wird, dadurch, daß die Elektrode mit einer hochfrequenten Wechselspannung beaufschlagt wird. Ein Vorteil dieses Verfahrens wird in der Vermeidung von auf der Folie verbleibenden Restladungen, die das weitere Verarbeiten und Handhaben des Films beeinträchtigen, gesehen.

Aus der DE-A - 24 60 432 ist eine Vorrichtung zum Herstellen von Flachfilmen aus Thermoplasten oder von zwei- oder dreischichtigen flächenförmigen Verbundwerkstoffen bekannt, bei der durch eine Koronaentladung die Luftströmung von dem Bereich der Berührung eines Kunststoffilmes mit einer Kühlwalze ferngehalten wird. Dabei wirkt die Koronaentladung wie eine Gasdichtung. Werden zweilagige bahnförmige Verbundwerkstoffe hergestellt, so weist die Vorrichtung eine Hochspannungselektrode, zwei einen Walzenspalt bildende Walzen und eine Vorrichtung zum Einbringen eines Kleberfilms als Haftvermittler zwischen die beiden Bahnen im Walzenspalt auf. Dabei verhindert die Koronaentladung den Lufteinzug zwischen den beiden miteinander zu verklebenden Verbundwerkstoffen, die beispielsweise Papier und Aluminium sind, da aufgrund der Feldstärke der Koronaentladung eine Gassperre errichtet wird, die von der im Umfangsbereich der Walzen strömenden Luft nicht überwunden werden kann. Da in dem Bereich der spaltförmigen Durchbrechung der Koronaelektrode keine Luftströmung an den Kleberfilm gelangen kann, tritt auch ein vorzeitiges Abkühlen des Klebers nicht auf, so daß dessen Klebeeigenschaften nicht nachteilig verändert werden.

Aus der DE-AS 12 35 564, auf welcher die Oberbegriffe der Ansprüche 1 und 8 basieren, ist ein Verfahren bekannt, bei dem eine Luftdüse im Bereich der Auflauflinie des Schmelzefilms auf die Kühlwalze unter einem bestimmten Winkel zu der Kühlwalze angeordnet ist. Die Luftdüse wird von einem Hochdruckgebläse mit Luft oder Gas beaufschlagt. Der aus dem Düsenspalt austretende Luft-oder Gasstrahl übt über die gesamte Schmelzefilmbreite eine Druckkraft auf den Schmelzefilm aus, die diesen an die Kühlwalze anlegt. Von Nachteil ist dabei, daß im Hinblick auf das Anlegen bei hohen Maschinengeschwindigkeiten hohe Luftdrücke in dem Düsenspalt erzeugt werden müssen. Daraus resultierende, ungünstige Luftströmungsverhältnisse im Anlegebereich können den Schmelzefilm zum Flattern bringen, wodurch ein einwandfreies Anlegen nicht mehr gewährleistet ist. Darüber hinaus gefährdet das Anblasen des duktilen Schmelzefilms mit Schmutzpartikeln die Qualität des Produktes, so daß eine Filtration der Gebläseluft praktisch unverzichtbar ist, um eine erhebliche Qualitätsminderung zu vermeiden.

Aufgabe der Erfindung ist es, das eingangs beschriebene Verfahren sowie die Vorrichtung zum Anlegen eines Schmelzefilms an eine Kühlfläche so zu verbessern, daß Flattern und Verunreinigungen des Schmelzefilms durch das Anblasen des Schmelzefilms mit Luft oder Gas vermieden werden und darüber hinaus die Schmelzefilmeigenschaften gezielt beeinflußt werden können.

Diese Aufgabe wird verfahrensgemäß dadurch gelöst, daß im Bereich der Auflauflinie des Schmelzefilms auf die Kühlfläche dem Gas- bzw. Luftstrom eine von einem hochfrequenten Wechselstrom erzeugte Koronaentladung überlagert wird, und daß die von der Koronaentladung überlagerte Luft bzw. das überlagerte Gas mit einem Aerosol angereichert wird, das durch Ultraschallzerstäubung aus einer Flüssigkeit gewonnen wird.

In Weiterbildung des Verfahrens wird der Gas- bzw. Luftstrom über die Breite des Schmelzefilms angetragen und wird der hochfrequente Wechselstrom für die Koronaentladung in unmittelbarer Nähe des Austrittsspalts einer Düse für den Gas- bzw. Luftstrom erzeugt. Dabei kann vorgesehen werden, daß der Gas- bzw. Luftstrom in eine Anzahl von Strömen aufgeteilt wird, die mit unterschiedlich starken Staudrücken die freie Oberfläche des Schmelzefilms beaufschlagen. Zweckmäßigerweise strömen die Gas- bzw. Luftströme sowohl zeitlich als auch örtlich intermittierend die freie Oberfläche des Schmelzefilms an.

Dabei weist die mit einem Aerosol angereicherte Luft bzw. das angereicherte Gas eine Temperatur zwischen 2 und 95 °C auf und wird die Temperatur durch Erwärmen der Luft bzw. des Gases und/oder des Aerosols eingestellt. Zweckmäßigerweise wird der in das elektrische Feld hochfrequenter Wechselspannung eingeblasene Luft- oder Gasstrom mit einem Aerosol von Monomeren, Dispersionen, Lösungen nieder- und/oder hochmolekularer Komponenten oder kolloidalen Systemen angereichert.

In weiterer Ausgestaltung des Verfahrens wird die Hochspannungselektrode mit einem hochfrequenten Wechselstrom mit einer Stromstärke von 0,1 bis 2 Ampere und einer Spannung von 5 bis 100 kV, insbesondere 5 bis 30 kV, und einer Frequenz von 3 bis 100 kHz, insbesondere 8 bis 32 kHz, gespeist.

Die Vorrichtung zum Anlegen eines Films aus einer Kunststoffschmelze an eine rotierende Kühlwalze, mit einer Breitschlitzdüse zum Extrudieren eines Schmelzefilms auf die Kühlwalze und mit einer Düse, durch deren Austrittsspalt Luft bzw. Gas ausströmt und die freie Oberfläche des Schmelzefilms beaufschlagt, zeichnet sich dadurch aus, daß die Düse über ein Regelventil mit einem Druckgebläse verbunden ist, daß an den Außenseiten der Düsenlippen der Düse Elektroden angeordnet sind, die über eine Leitung an einen Hochfrequenzgenerator angeschlossen sind, und zwischen dem Druckgebläse und dem Regelventil ein Ultraschallzerstäuber in der Versorgungsleitung angeordnet, in dem durch Zerstäuben einer Flüssigkeit Aerosol erzeugt wird, das in die Düse strömt.

Die weitere Ausgestaltung der Vorrichtung ergibt sich aus den Merkmalen der Patentansprüche 11 bis 14.

Die Erfindung wird im folgenden anhand der Zeichnungen näher erläutert. Es zeigen:
- Fig. 1: eine schematische Ansicht einer Vorrichtung nach der Erfindung,
- Fig. 2: einen Schnitt durch eine Düse, mit Elektroden an den Außenseiten der Düsenelektroden, als Bestandteil der Vorrichtung nach Fig. 1, und
- Fig. 3: im Detail die Ausbildung der Elektroden.

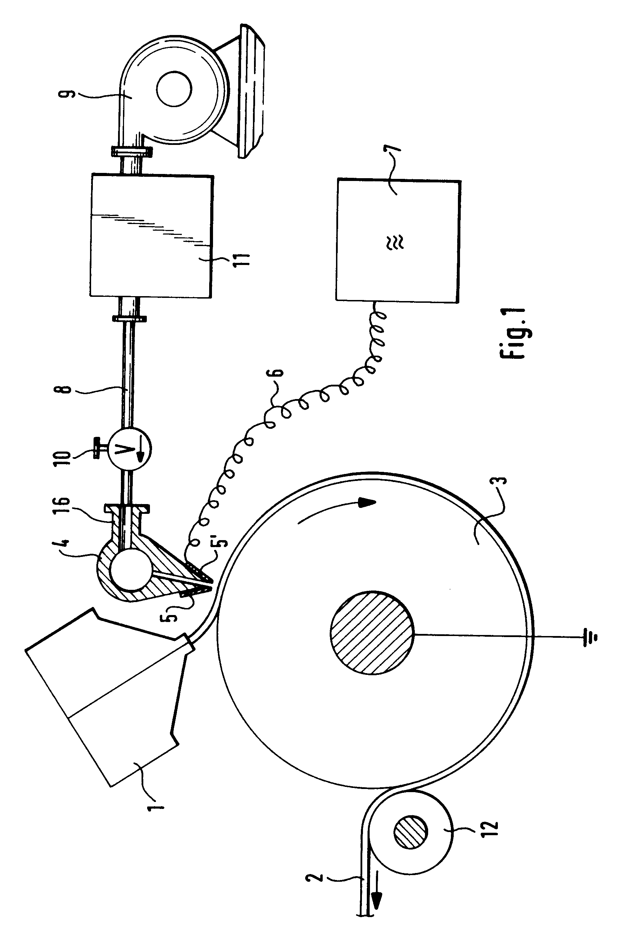

Wie Figur 1 zeigt, ist im Bereich der Auftrefflinie eines aus einer Breitschlitzdüse 1 austretenden Schmelzefilms 2 auf eine Kühl- und Abzugswalze 3 eine Düse 4 positioniert, deren Aufbau einem nach aerodynamischen Gesichtspunkten ausgelegten Luftmesser entspricht. Der über mehr als den halben Umfang der Kühlwalze 3 anliegende Schmelzefilm 2 wird im Bereich einer Umlenkrolle 12 von der Kühlwalze 3 abgelöst und nicht gezeigten Streckeinrichtungen zugeführt.

An den beiden Düsenlippen der Düse 4 sind, im Falle daß die Düse aus Metall gefertigt ist, zwei gegenüber den Düsenlippen elektrisch isolierte Elektroden 5, 5′ befestigt, die über eine Leitung 6, z.B. ein Hochspannungskabel, mit einem Hochfrequenzgenerator 7 in Verbindung stehen. Der Hochfrequenzgenerator 7 speist die beiden Elektroden 5, 5′ mit einem hochfrequenten Wechselstrom hoher Spannung. Üblicherweise fließt an den Elektroden 5, 5′ ein Strom der Stärke von 0,1 bis 2 Ampere bei einer Spannung von 10 bis 100 kV, vorzugsweise 2 bis 20 kV, und einer Frequenz von 3 bis 100 kHz, bevorzugt 8 bis 32 kHz. Die Kühlwalze 3 liegt auf Erdpotential. Die Versorgung der Düse 4 mit der für das Anlegen des Schmelzefilms erforderlichen Luft- bzw. Gasmenge erfolgt über eine Versorgungsleitung 8, bei der es sich um eine Rohr- oder Hochdruckschlauchleitung handeln kann, von einem Gebläse 9 aus. Ein Absperrventil 10 ermöglicht die Einstellung des gewünschten bzw. erforderlichen Blasdruckes in der Düse 4.

Anstelle von Luft, die mittels des Gebläses 9 zugeführt wird, kann die Düse 4 auch mit Gasen, wie Stickstoff oder Edelgasen, aus entsprechenden Versorgungssystemen, z.B. Gasflaschen, beaufschlagt werden. Diese Verfahrensmaßnahme bietet über die Auswahl geeigneter Gase die Möglichkeit, sowohl den Koronaentladungsprozeß und damit auch den Anlegevorgang gezielt zu beeinflussen, als auch gezielte Modifizierungen am Schmelzefilm hinsichtlich seiner Oberflächentopografie und Morphologie vornehmen zu können.

Bei einer ersten Ausführungsform der Vorrichtung ist ein in Figur 1 gezeigter Ultraschallzerstäuber 11, der noch näher erläutert werden wird, weggelassen.

Bezüglich der Ausgestaltung der beiden, praktisch als Verlängerung der Düsenlippen wirkenden Elektroden 5, 5′ gibt es, im Gegensatz zu den eingangs erläuterten Kriterien beim Gleichstrom-Pinning-Verfahren, keine Beschränkungen. Für den beschriebenen Einsatz haben sich Steg- oder Messerelektroden als günstige Form herauskristallisiert. Aluminiumflachprofile in Dicken von 1 bis 5 mm, die gegebenenfalls auch scharfkantig in Messerform ausgebildet sein können, erfüllen alle gestellten Anforderungen.

Prinzipiell ist es auch möglich, auf die Elektroden 5, 5′ zu verzichten und die Hochspannung direkt an die gegenüber den übrigen Teilen der Vorrichtung isolierend aufgehängten Luftdüse anzulegen, so daß deren Düsenlippen die Funktion der Elektroden übernehmen.

Als Besonderheit bei der Auslegung der Arbeitsbreite der Elektroden 5, 5′ ist darauf zu achten, daß die Elektroden schmaler sein müssen als der jeweils aus der Breitschlitzdüse 1 austretende Schmelzefilm 2, um elektrische Überschläge zur geerdeten Kühlwalze 3 hin zu vermeiden. Da das elektrische Feld der Koronaentladung an den Elektrodenenden sich seitlich ohnehin auffächert, ist trotzdem eine einwandfreie Randanlegung des Schmelzefilms gewährleistet.

Die zweite Ausführungsform gemäß Fi. 1 umfaßt den Ultraschallzerstäuber 11, der zwischen dem Gebläse 9 und dem Absperrventil 10 in der Versorgungsleitung 8 angeordnet ist. Die Düse 4 wird von dem Gebläse 9 mit Luft beschickt, die mit einem Aerosol angereichert ist, das durch Ultraschallzerstäubung einer Flüssigkeit in dem Ultraschallzerstäuber 11 erzeugt wird. Als Zerstäuber kommen Zweistoffzerstäuberdüsen zum Einsatz, bei denen die Flüssigkeit durch mit Ultraschallgeschwindigkeit austretende Luft in winzige Tröpfchen zerrissen wird, insbesondere piezoelektrische Ultraschallschwinger.

Neben der bereits erwähnten Gasbeaufschlagung durch die Düse 4 erweitert das Einblasen von Aerosolen die verfahrenstechnischen Möglichkeiten des Anlegeverfahrens erheblich. Zur Versprühung bieten sich Monomere, Dispersionen und Lösungen nieder- und/oder hochmolekularer Komponenten in wäßriger Form oder in Lösungsmitteln sowie kolloidale Systeme an.

In vorteilhafter Weise wird das Aerosol durch das elektrische Feld der Koronaentladung ausschließlich im Bereich der beiden Elektroden 5, 5′ gebunden und kann nicht in die Umgebung vagabundieren.

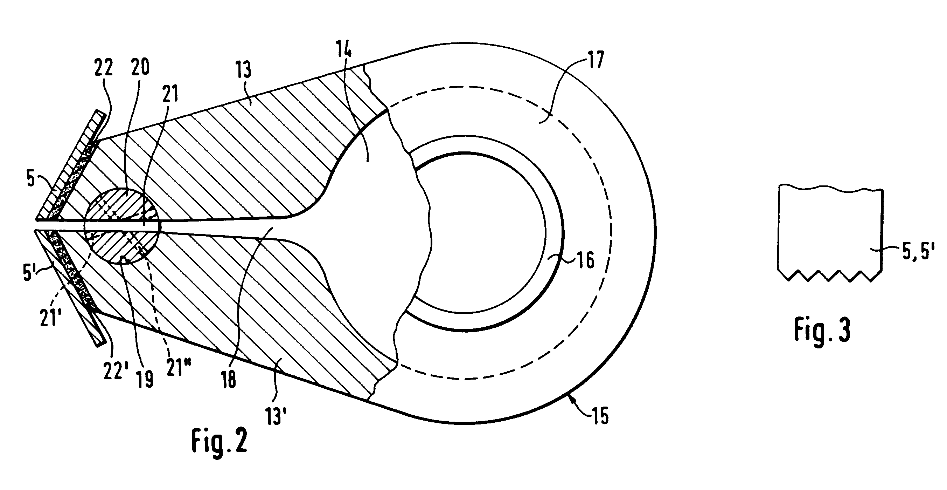

Figur 2 zeigt einen Querschnitt durch eine spezielle Ausführungsform der Düse 4, deren Aufbau weitgehend mit demjenigen herkömmlicher Luftmesser übereinstimmt. Die Düse 4 besteht im wesentlichen aus einem angenähert zylindrischen Grundkörper 15, der in zwei keilförmige Düsenlippen 13, 13′ übergeht. In dem Grundkörper 15 befindet sich ein Druckausgleichskanal 14, in den axial über zwei an den Seitenscheiben 17 angebrachten Rohrstutzen 16 Luft eingeblasen wird. Der Druckausgleichskanal 14 geht in einen, von den Düsenlippen 13, 13′ eingeschlossenen Düsenschlitz 18 über. Dieser ist im Bereich der Düsenmündung durch eine über die gesamte Düsenbreite verlaufende Bohrung 19 unterbrochen, in die ein drehbarer Drehschieber 20 eingepaßt ist. Der Drehschieber 20, im Prinzip ein zylindrischer Stab mit einer Vielzahl von über seine Gesamtlänge verteilten, zueinander geneigten Bohrungen 21, 21′, 21˝, steht über ein Kupplungselement, das durch eine in der einen Seitenscheibe 17 befindliche, nicht dargestellte Bohrung nach außen geführt ist, mit einem Antriebsaggregat, z.B. einem Getriebemotor, in Verbindung. Die Düsenmündung wird praktisch durch die beiden Hochspannungselektroden 5, 5′ gebildet, die gegenüber den Düsenlippen 13, 13′ durch Isolatoren 22, 22′ elektrisch abgeschirmt sind.

Der Verlauf der Bohrungen 21′, 21˝ innerhalb des Drehschiebers 20 ist gestrichelt angedeutet. Die Bohrungen 21, 21′, 21˝ haben gleich oder unterschiedlich große Durchmesser.

Der Vorteil der durch den integrierten Drehschieber 20 modifizierten Düse 4 besteht darin, daß der aus dem Düsenschlitz 18 austretende Luft- bzw. Gasstrahl in Teilströme aufgeteilt wird. Da in Abhängigkeit von der Drehbewegung des Drehschiebers 20 ständig wechselnde Bohrungen 21, 21′, 21˝, ... freigegeben werden, resultiert daraus eine sich sowohl zeitlich als auch örtlich ändernde Druckbeaufschlagung mit Luft bzw. Gas des anzulegenden Schmelzefilms. Dieser Effekt kann im Sinne einer zufallsbedingten Beeinflussung des Dickenprofils des Schmelzefilms in zweifacher Hinsicht genutzt werden. Zum einen bewirkt der örtlich unterschiedliche Staudruck des einzelnen Teilstroms lokale Schmelzedeformationen und damit gewollte Dickenschwankungen, und zum anderen kommen die aus den variierenden Abkühlbedingungen resultierenden morphologischen Unterschiede im Polymerfilm in den nachfolgenden Streckprozessen, vornehmlich beim Querstrecken, zum Tragen. Letzteres tritt insbesondere dann ein, wenn gezielte Abkühlbedingungen, wie z.B. Anreicherung der Blasluft mit Aerosolen, eingestellt werden.

Fig. 3 zeigt schematisch eine mögliche Ausbildung der beiden Elektroden 5, 5′, deren Entladungskanten die Gestalt von Sägezahnprofilen besitzen. Selbstverständlich können die Entladungskanten ähnlich einem Messer profiliert sein.

Das Verfahren zum luftfreien Anlegen von schmelzflüssigen Polymerfilmen mittels einer Wechselstromkoronaentladung, in die über eine Düse in Gestalt eines Luftmessers Luft, Gase oder Aerosole eingeblasen werden, ergibt durch die Kombination von zwei Anlegesystemen neben einer hohen Anlegewirksamkeit, auch bei hohen Abzugsgeschwindigkeiten, zusätzlich die Möglichkeit der Einflußnahme auf den Schmelzefilm. Mittels der elektischen Koronaentladung läßt sich über die physikalisch-chemische Veränderung der Oberfläche hinaus auch noch deren mechanische Strukturierung einstellen. Genutzt werden kann dieser Effekt, alternativ zu den bisher üblichen Rohstoffmodifizierungen durch Pigmente, die in den meisten Fällen die Eigenschaften des Grundrohstoffes beeinflussen, zum Einstellen gewünschter Rauhigkeiten auf Folien für Spezialanwendungen, wie Computer-, Audio- und Videobändern.

Anwendbar sind das Verfahren und die Vorrichtung grundsäztlich zum Anlegen aller gängigen, im Extrusionsverfahren zu Flachfolien verarbeitbaren Polymeren, wie etwa Polyethylenterephthalat, Polypropylen, Polyethylen, Polyamid etc.

## Patentansprüche

1. Verfahren zum Anlegen eines Films aus einer Kunststoffschmelze an eine bewegte Kühlfläche, bei dem ein Schmelzefilm (2) aus einer Breitschlitzdüse (1) ohne Lufteinschluß auf die Kühlfläche extrudiert und auf die freie Oberfläche des an der Kühlfläche anliegenden Schmelzefilms durch einen Gas- bzw. Luftstrom Druck ausgeübt wird, dadurch gekennzeichnet, daß im Bereich der Auflauflinie des Schmelzefilms auf die Kühlfläche dem Gas- bzw. Luftstrom eine von einem hochfrequenten Wechselstrom erzeugte Koronaentladung überlagert wird und daß die von der Koronaentladung überlagerte Luft bzw. das überlagerte Gas mit einem Aerosol angereichert wird, das durch Ultraschallzerstäubung aus einer Flüssigkeit gewonnen wird.

2. Verfahren nach Anspruch 1, dadurch gekennzeichnet, daß der Gas- bzw. Luftstrom über die Breite des Schmelzefilms (2) angetragen wird und daß der hochfrequente Wechselstrom für die Koronaentladung in unmittelbarer Nähe des Austrittsspalts einer Düse (4) für den Gas- bzw. Luftstrom erzeugt wird.

3. Verfahren nach den Ansprüchen 1 und 2, dadurch gekennzeichnet, daß der Gas- bzw. Luftstrom in eine Anzahl von Strömen aufgeteilt wird, die mit unterschiedlich starken Staudrücken die freie Oberfläche des Schmelzefilms (2) beaufschlagen.

4. Verfahren nach Anspruch 3, dadurch gekennzeichnet, daß die Gas- bzw. Luftströme sowohl zeitlich als auch örtlich intermittierend die freie Oberfläche des Schmelzefilms (2) anströmen.

5. Verfahren nach den Ansprüchen 1 bis 4, dadurch gekennzeichnet, daß die mit einem Aerosol angereicherte Luft bzw. das angereicherte Gas eine Temperatur zwischen 2 und 95 °C aufweist und daß die Temperatur durch Erwärmen der Luft bzw. des Gases und/oder des Aerosols eingestellt wird.

6. Verfahren nach den Ansprüchen 1 bis 5, dadurch gekennzeichnet, daß der in das elektrische Feld hochfrequenter Wechselspannung eingeblasene Luft- oder Gasstrom mit einem Aerosol von Monomeren, Dispersionen, Lösungen nieder- und/oder hochmolekularer Komponenten oder kolloidalen Systemen angereichert wird.

7. Verfahren nach einem oder mehreren der Ansprüche 1 bis 6, dadurch gekennzeichnet, daß die Hochspannungselektrode (5, 5') mit einem hochfrequenten Wechselstrom mit einer Stromstärke von 0,1 bis 2 Ampere und einer Spannung von 5 bis 100 kV, insbesondere 5 bis 30 kV,und einer Frequenz von 3 bis 100 kHz, insbesondere 8 bis 32 kHz, gespeist wird.

8. Vorrichtung zum Anlegen eines Films (2) aus einer Kunststoffschmelze an eine rotierende Kühlwalze (3), mit einer Breitschlitzdüse (1) zum Extrudieren des Schmelzefilms (2) auf die Kühlwalze (3) und mit einer Düse (4), durch deren Austrittsspalt Luft bzw. Gas ausströmt und die freie Oberfläche des Schmelzefilms (2) beaufschlagt, dadurch gekennzeichnet, daß die Düse (4) über ein Regelventil (10) mit einem Druckgebläse (9) verbunden ist, daß an den Außenseiten der Düsenlippen der Düse (4) Elektroden (5, 5') angeordnet sind, die über eine Leitung (6) an einen Hochfrequenzgenerator (7) angeschlossen sind und daß zwischen dem Druckgebläse (9) und dem Regelventil (10) ein Ultraschallzerstäuber (11) in der Versorgungsleitung (8) angeordnet ist, in dem durch Zerstäuben einer Flüssigkeit Aerosol erzeugt wird, das in die Düse (4) strömt.

9. Vorrichtung nach Anspruch 8, dadurch gekennzeichnet, daß die Elektroden (5, 5') gegen die Düsenlippen der Düse (4) elektrisch isoliert sind und Messerform haben.

10. Vorrichtung nach Anspruch 9, dadurch gekennzeichnet, daß die Entladungskanten der beiden Elektroden (5, 5') eine Profilierung, insbesondere in Form eines Sägezahnprofils, aufweisen.

11. Vorrichtung nach Anspruch 8, dadurch gekennzeichnet, daß die beiden Düsenlippen (13, 13') der Düse (4) eine sich über die gesamte Düsenbreite erstreckende Bohrung (19) zur Aufnahme eines Drehschiebers (20) einschließen.

12. Vorrichtung nach Anspruch 11, dadurch gekennzeichnet, daß der Drehschieber (20) in der Bohrung (19) drehbar ist und eine Anzahl von zueinander geneigten Bohrungen (21, 21', 21") enthält, die gleiche bzw. unterschiedliche Durchmesser aufweisen.

## Claims

1. Process for laying a film of a plastics melt on a moved cooling surface, in which a melt film (2) is extruded from a sheet die (1) onto the cooling surface without air inclusion and pressure is exerted on the free surface of the melt film lying on the cooling surface by a gas or air stream, characterised in that a corona discharge generated by a high frequency alternating current is superimposed on the gas or air stream in the region of the line of contact of the melt film on the cooling surface, and in that the air or the gas on which the corona discharge is superimposed is enriched with an aerosol obtained from a liquid by ultrasonic atomisation.

2. Process according to Claim 1, characterised in that the gas or air stream is applied over the width of the melt film (2) and that the high frequency alternating current for the corona discharge is generated in the immediate vicinity of the outlet gap of a nozzle (4) for the gas or air stream.

3. Process according to Claims 1 and 2, characterised in that the gas or air stream is divided into a number of streams, which subject the free surface of the melt film (2) to dynamic pressures of different magnitudes.

4. Process according to Claim 3, characterised in that the gas or air streams flow intermittently with respect both to time and to position onto the free surface of the melt film (2).

5. Process according to Claims 1 to 4, characterised in that the air enriched with an aerosol or the gas enriched with an aerosol has a temperature between 2 and 95°C and in that the temperature is adjusted by heating the air or the gas and/or the aerosol.

6. Process according to Claims 1 to 5, characterised in that the air or gas stream blown into the electrical field of high frequency alternating voltage is enriched with an aerosol of monomers, dispersions, solutions of low molecular weight and/or high molecular weight components or colloidal systems.

7. Process according to one or more of Claims 1 to 6, characterised in that the high voltage electrode (5, 5') is fed with a high frequency alternating current with a current intensity of 0.1 to 2 amperes and a voltage of 5 to 100 kV, especially 5 to 30 kV, and a frequency of 3 to 100 kHz, especially 8 to 32 kHz.

8. Device for laying a film (2) of a plastics melt on a rotating cooling roll (3), having a sheet die (1) for extruding the melt film (2) onto the cooling roll (3) and having a nozzle (4) through the outlet gap of which air or gas flows out and acts on the free surface of the melt film (2), characterised in that the nozzle (4) is connected via a control valve (10) to a pressure blower (9), in that electrodes (5, 5') are disposed on the external sides of the nozzle lips of the nozzle (4) and connected via a line (6) to a high frequency generator (7), and in that an ultrasonic atomiser (11) is disposed in the supply line (8) between the pressure blower (9) and the control valve (10), in which aerosol is generated by atomising a liquid and flows into the nozzle (4).

9. Device according to Claim 8, characterised in that the electrodes (5, 5') are electrically insulated with respect to the nozzle lips of the nozzle (4) and have a knife shape.

10. Device according to Claim 9, characterised in that the discharge edges of the two electrodes (5, 5') are profiled, especially in the shape of a sawtooth profile.

11. Device according to Claim 8, characterised in that the two nozzle lips (13, 13') of the nozzle (4) enclose a hole (19), extending over the complete nozzle width, to receive a rotary valve (20).

12. Device according to Claim 11, characterised in that the rotary valve (20) is rotatable in the hole (19) and contains a number of holes (21, 21', 21") which are inclined with respect to each other and have the same or different diameters.

## Revendications

1. Procédé pour appliquer un film de matière plastique fondue sur une surface de refroidissement en mouvement, selon lequel un film de matière plastique fondue (2) est extrudé par une filière à fente large (1) sans inclusion d'air sur la surface de refroidissement et une pression est exercée sur la surface libre du film de matière fondue appliquée sur la surface de refroidissement par un courant de gaz ou d'air, caractérisé en ce que, dans la région de la ligne de dépose du film de matière plastique fondue sur la surface de refroidissement, on superpose au courant de gaz ou d'air une décharge corona produite par un courant alternatif à haute fréquence, et en ce que l'air ou le gaz auquel est superposée une décharge corona est enrichi par un aérosol qui est issu d'un liquide par une pulvérisation par ultrasons.

2. Procédé selon la revendication 1, caractérisé en ce que le courant de gaz ou d'air est appliqué sur toute la largeur du film (2) de matière plastique fondue et en ce que le courant alternatif à haute fréquence utilisé pour la décharge corona est produit dans le voisinage immédiat de la fente de sortie d'une buse (4) débitant le courant de gaz ou d'air.

3. Procédé selon les revendications 1 et 2, caractérisé en ce que le courant de gaz ou d'air est subdivisé en un certain nombre de courants qui "frappent" la surface libre du film (2) de matière plastique fondue avec des pressions dynamiques de différentes intensités.

4. Procédé selon la revendication 3, caractérisé en ce que les courants de gaz ou d'air "frappent" la surface libre du film (2) de matière plastique fondue d'une façon intermittente aussi bien dans le temps que dans l'espace.

5. Procédé selon les revendications 1 à 4, caractérisé en ce que l'air enrichi par un aérosol ou le gaz enrichi présente une température d'entre 2 et 95°C environ et en ce que la température est réglée par chauffage de l'air ou du gaz et/ou de l'aérosol.

6. Procédé selon les revendications 1 à 5, caractérisé en ce que le courant de gaz ou d'air soufflé dans le champ électrique de tension alternative à haute fréquence est enrichi d'un aérosol de monomères, dispersions, solutions, de composants à bas et/ou haut poids moléculaire ou par des systèmes colloïdaux.

7. Procédé selon une ou plusieurs des revendications 1 à 6, caractérisé en ce que l'électrode de haute tension (5, 5') est alimentée par un courant alternatif à haute fréquence d'une intensité de 0,1 à 2 A et d'une tension de 5 à 100 kV, notamment de 5 à 30 kV, et d'une fréquence de 3 à 100 kHz, notamment de 8 à 32 kHz.

8. Dispositif pour appliquer un film (2) de matière plastique fondue sur un tambour de refroidissement tournant (3) comprenant une filière à fente large (1) servant à extruder le film de matière plastique fondue (2) sur le tambour de refroidissement (3) et une buse (4) à travers la fente de sortie de laquelle de l'air ou un gaz sort et "frappe" la surface libre du film (2) de matière plastique fondue, caractérisé en ce que la buse (4) est reliée par l'intermédiaire d'une vanne de réglage (10) à un ventilateur soufflant (9), en ce que le long des côtés extérieurs des lèvres de la buse (4) sont disposées des électrodes (5, 5') qui sont connectées à un générateur de haute fréquence (7) par une ligne (6) et en ce que, entre le ventilateur soufflant (9) et la vanne de réglage (10) est disposé, dans la conduite d'alimentation (8), un pulvérisateur à ultrasons (11) dans lequel on produit par pulvérisation d'un liquide un aérosol qui pénètre dans la buse (4).

9. Dispositif selon la revendication 8, caractérisé en ce que les électrodes (5, 5') sont isolées électriquement des lèvres de la buse (4) et présentent la forme de lames.

10. Dispositif selon la revendication 9, caractérisé en ce que les arêtes de décharge des deux électrodes (5, 5') présentent un profilage, notamment sous la forme d'un profil en dents de scie.

11. Dispositif selon la revendication 8, caractérisé en ce que les deux lèvres (13, 13') de la buse (4) présentent un perçage (19) s'étendant sur toute la largeur de la buse et destiné à recevoir un obturateur tournant (20).

12. Dispositif selon la revendication 11, caractérisé en ce que l'obturateur tournant (20) peut tourner dans le perçage (19) et présente un certain nombre de perçages (21, 21', 21") inclinés les uns par rapport aux autres qui présentent le même diamètre ou des diamètres différents.
